Europäisches Patentamt

European Patent Office

Office européen des brevets

(11) Veröffentlichungsnummer: **0 362 702**
**A2**

# (12) EUROPÄISCHE PATENTANMELDUNG

(21) Anmeldenummer: **89117993.9**

(22) Anmeldetag: **28.09.89**

(51) Int. Cl.⁵: **B23Q 3/155**

(30) Priorität: **01.10.88 DE 3833482**

(43) Veröffentlichungstag der Anmeldung:
**11.04.90 Patentblatt 90/15**

(84) Benannte Vertragsstaaten:
**AT BE CH DE ES FR GB GR IT LI LU NL SE**

(71) Anmelder: **Schmoll Maschinen GmbH**
**Werkzeug- und Vorrichtungsbau**
**Westerbachstrasse 4**
**D-6242 Kronberg(DE)**

(72) Erfinder: **Rippel, Herbert KEIL &**
**SCHAAFHAUSEN, Patentanwälte**
**Eysseneckstrasse 31**
**D-6000 Frankfurt am Main 1(DE)**

(74) Vertreter: **Keil, Rainer A., Dipl.-Phys. Dr.**
**KEIL & SCHAAFHAUSEN Patentanwälte**
**Eysseneckstrasse 31**
**D-6000 Frankfurt am Main 1(DE)**

(54) Werkzeugwechseleinrichtung an einer Werkzeugmaschine.

(57) Die Erfindung bezicht sich auf eine Werkzeugwechseleinrichtung an einer Werkzeugmaschine, bei welcher jedes einer Vielzahl von Werkzeugen (2) aus einer entsprechende Werkzeugaufnahmelöcher aufweisenden Speicherplatte (1) mittels einer einen z.B. als Hubgreifer ausgebildeten Greifer (4) aufweisenden Werkzeugtransporteinrichtung herausgezogen und eine Arbeitseinheit (7) übergeben sowie nach Gebrauch aus der Arbeitseinheit (7) herausgenommen, wieder zurück zur Speicherplatte (1) gebracht und in eines der Werkzeugaufnahmelöcher (3) gesteckt wird, wobei den Werkzeugaufnahmelöchern (3) Mittel zum Halten der Werkzeuge (2) zugeordnet sind. Zur Vereinfachung der Bedienung einer solchen Vorrichtung sowie zur Verbesserung ihrer Funktionssicherheit ist mit der Erfindung vorgesehen, die bisher üblichen Klemmringe auf den Werkzeugen dadurch zu ersetzen, daß der Speicherplatte (1) auf der dem Greifer (4) abgewandten Seite in vorgegebenem Abstand hinter den Werkzeugaufnahmelöchern (3) Anschlagmittel (5) für den jeweiligen Halteschaft (6) der Werkzeuge (2) zugeordnet sind, und daß der Greifer (4) beim Entnehmen des Werkzeugs (2) aus der Speicherplatte (1) und beim Übergeben des Werkzeugs (2) an die Arbeitseinheit (7) auf Anschlag mit der Speicherplatte (1) bzw. auf Anschlag mit der Arbeitseinheit (7) verfahrbar ist.

FIG.1a

## Werkzeugwechseleinrichtung an einer Werkzeugmaschine

Die Erfindung bezieht sich auf eine Werkzeugwechseleinrichtung an einer Werkzeugmaschine, bei welcher jedes einer Vielzahl von Werkzeugen aus einer entsprechende Werkzeugaufnahmelöcher aufweisenden Speicherplatte mittels einer einen z.B. als Hubgreifer ausgebildeten Greifer aufweisenden Werkzeugtransporteinrichtung herausgezogen und einer Arbeitseinheit übergeben sowie nach Gebrauch aus der Arbeitseinheit herausgenommen, wieder zurück zur Speicherplatte gebracht und in eines der Werkzeugaufnahmelöcher gesteckt wird, wobei den Werkzeugaufnahmelöchern Mittel zum Halten der Werkzeuge zugeordnet sind.

Eine solche Werkzeugwechseleinrichtung ist beispielsweise aus der DE 35 39 296 A1 in Verbindung mit der DE 35 39 295 A1 bekannt. Die bekannte Werkzeugwechseleinrichtung arbeitet mit mindestens einer Speicherplatte, welche auf ihrer Oberseite mit einer Beschichtung aus elastisch nachgiebigem Material versehen ist, die den Werkzeugaufnahmelöchern zugeordnete, diesem gegenüber verengte Durchbrechungen aufweist. Zur Festlegung einer definierten Einschubtiefe bzw. Einschubtiefenbegrenzung für das jeweilige Werkzeug in der Arbeitseinheit muß auf dem Halteschaft eines jeden Werkzeuges ein Anschlagring aufgebracht werden. Dies geschieht in aller Regel durch Aufschieben eines Klemmringes auf den Werkzeugschaft. Neben dem Aufwand für das Aufschieben eines solchen Klemmringes auf jeden einzelnen Werkzeugschaft ergeben sich mitunter Probleme durch ungenaue Montage oder Verkantungen des Klemmringes, die zu Funktionsstörungen bei der Bearbeitung führen können. Außerdem nutzen sich derartige Anschlagringe ab, was zu Ungenauigkeiten bei der Bearbeitung des Werkstückes führen kann.

Hiervon ausgehend ist es daher Aufgabe der Erfindung, eine Werkzeugwechseleinrichtung der gattungsgemäßen Art so weiterzubilden, daß eine zuverlässige Positionierung des Werkzeugs in der Arbeitseinheit ohne Montage eines Anschlagringes auf dem Halteschaft des Werkzeugs erzielt werden kann.

Diese Aufgabe wird erfindungsgemäß im wesentlichen dadurch gelöst, daß der Speicherplatte auf der dem Greifer abgewandten Seite in vorgegebenem Abstand hinter den Werkzeugaufnahmelöchern Anschlagmittel für den jeweiligen Halteschaft der Werkzeuge zugeordnet sind, und daß der Greifer jedenfalls beim Entnehmen des Werkzeugs aus der Speicherplatte und beim Übergeben des Werkzeugs an die Arbeitseinheit auf Anschlag mit der Speicherplatte bzw. auf Anschlag mit der Arbeitseinheit verfahrbar ist. Eine solche Werkzeugwechseleinrichtung vereinfacht die Handhabung der Werkzeuge und arbeitet mit erhöhter Funktionssicherheit. Weil die Werkzeuge bedingt durch die definierte Ausgangslage der Werkzeuge in der Speicherplatte und die Art der Bewegung des Greifers zwangsläufig immer die richtige Position in der Arbeitseinheit einnimmt. Insbesondere entfällt das arbeitsintensive Aufschieben der Anschlagringe auf die Werkzeughalteschäfte dabei völlig. Bestehende Werkzeugwechseleinrichtungen mit Speicherplatten sind mit geringem Aufwand nachrüstbar.

Eine vorteilhafte Weiterbildung der Erfindung liegt in der Verwendung einer parallel zur Speicherplatte verlaufenden Anschlagplatte als Anschlagmittel.

In einer weiteren vorteilhaften Weiterbildung der Erfindung weist der Greifer eine z.B. elastische Greiferhülse ausgebildeten Belag in der Werkzeugaufnahmeöffnung auf, so daß das Werkzeug beschädigungsfrei ergriffen und reibschlüssig festgehalten werden kann. Dadurch kann sich der Greifer ggf. auch geringfügig gegenüber dem Haltestab unter Überwindung des Reibschlusses axial verschieben, wenn der Halteschaft beim Einschieben des Werkzeugs in die Speicherplatte mit ihrem oberen Ende an den Anschlag gelangt ist.

Ein besonders gutes Greif- und Übergabeverhalten ergibt sich durch eine zangenartige Ausgestaltung des Greifers in einer Weiterbildung der Erfindung.

Durch eine vertikale Verfahrbarkeit des Greifers und eine definierte Anschlagfläche ermöglichen eine exakte Werkzeugaufnahme bzw. -übergabe.

Es zeigen:

Fig. 1a einen Schnitt durch eine Speicherplatte mit einem Werkzeug und durch einen darunter befindlichen Greifer,

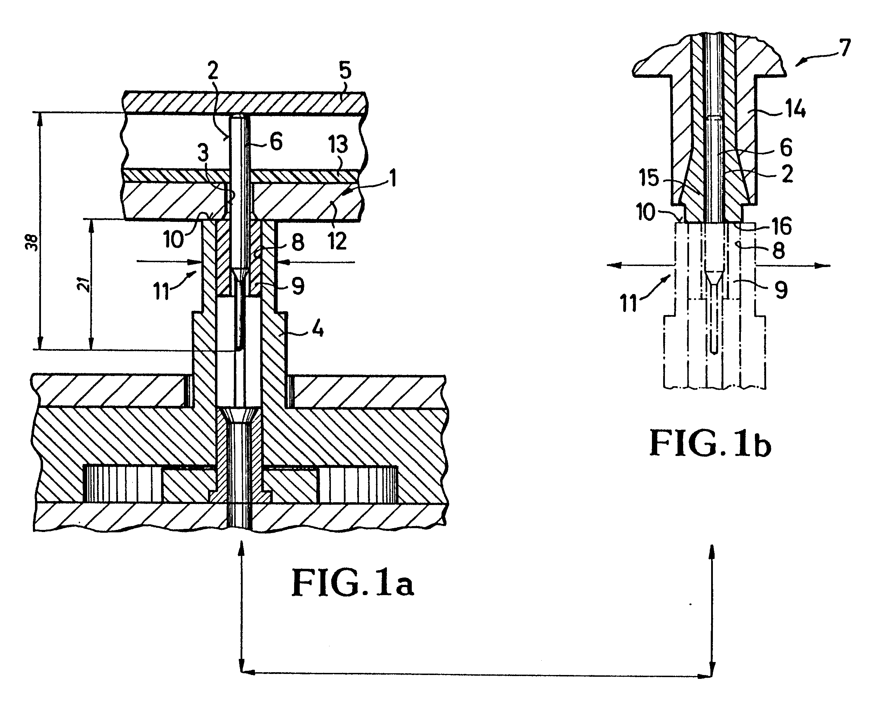

Fig. 1b Schnitt durch die Arbeitseinheit mit einem Werkzeug und durch das Mundstück des Greifers.

Das in der Zeichnung dargestellte Ausführungsbeispiel einer erfindungsgemäßen Werkzeugwechseleinrichtung weist eine Speichereinrichtung, eine Greif- und Transporteinrichtung und eine Arbeitseinheit auf. Die Speichereinrichtung besteht aus der Speicherplatte 1, die Werkzeugaufnahmelöcher 3 aufweist und sich aus einer Grundplatte 12 und einer Beschichtung 13 zusammensetzt, und einem der Rückseite der Speicherplatte 1 in vorgegebenem Abstand zugeordneten als Anschlagplatte ausgebildeten Anschlagmittel 5.

Der als Hubgreifer ausgebildete Greifer 4 hat in einem Mundstück 91 eine Werkzeugaufnahmeöffnung 8 in der ein als Greiferhülse 9 ausgebildeter Belag ist, wobei die das Mund stück 11 bildenden Teile des Greifers 4 zangenartig bewegbar angeordnet sind und an ihrer Stirnseite eine Anschlagfläche 10 bilden.

Der für die Bewegung des Greifers 4 von der Speicherplatte 1 zu der Arbeitseinheit 7 und zurück verantwortliche Transportmechanismus ist in der Zeichnung nicht dargestellt, jedoch sein Förderweg mit Pfeilen angedeutet.

Die Arbeitseinheit 7 besteht aus einer Arbeitsspindel 14 und einer Einspannzange 15. Die Einspannzange 15 weist an ihrem unteren Ende eine ebene Anschlagfläche 16 auf.

Das Werkzeug 2 hat einen Halteschaft 6 an dem es sowohl in der Speichereinrichtung 1 als auch in dem Greifer 4 sowie in der Arbeitseinheit 7 gehalten wird.

Zur Beschickung der Arbeitseinheit 7 mit einem Werkzeug 2 wird der Greifer 4 zunächst senkrecht unter das gewählte Werkzeug 2 in der Speichereinrichtung 1 verfahren. Sodann wird der Greifer 4 mit geöffnetem Mundstück 11 senkrecht nach oben gefahren, bis er mit der Anschlagfläche 10 an die ebene Unterseite der Grundplatte 12 anschlägt. Sodann wird das Mundstück 11 geschlossen, wodurch der Halteschaft 6 in der Einspannhülse 9 reibschlüssig eingespannt wird. Die Reibkraft zwischen dem Halteschaft 6 und der Einspannhülse 9 ist dann größer als die Rückhaltekraft zwischen der Speichereinrichtung 1 und dem Halteschaft 6. Anschließend wird der Greifer 4 senkrecht nach unten gefahren, wodurch das Werkzeug 2 aus der Speichereinrichtung 1 herausgezogen wird. Nun wird der Greifer 4 mit dem Werkzeug 2 bis senkrecht unter die Arbeitseinheit 7 verfahren. Dann hebt sich der Greifer 4 senkrecht und schiebt den Halteschaft 6 des Werkzeugs 2 soweit in die Einspannzange 15 bis die Anschlagfläche 10 des Greifers 4 an die Anschlagfläche 16 der Einspannzange 15 anschlägt. Der Halteschaft 6 des Werkzeugs 2 wird nun in der Einspannzange 15 eingespannt. Anschließend wird das Mundstück 11 des Greifers 4 geöffnet und der Greifer 4 zunächst nach unten und anschließend in seiner Wartestellung verfahren. Das Werkzeug 2 ist jetzt in einer genau vorgegebenen Lage in der Arbeitseinheit 7 einsatzbereit.

Falls die Werkzeugwechseleinrichtung zum Tiefenbohren eingesetzt werden soll, wird zunächst mit einer nicht abgebildeten an sich bekannten Meßeinrichtung die Länge des aus der Arbeitseinheit 7 herausragenden Abschnitts des Werkzeugs 2 ausgemessen und die Arbeitseinheit 7 mit dem Werkzeug 2 in Bezug auf das zu bearbeitende Werkstück in der richtigen Höhe positioniert.

Nach Beendigung der Bearbeitung eines Werkstückes wird zunächst der Greifer 4 wieder unter die Arbeitseinheit 7 gebracht, dann wird der Greifer 4 mit geöffnetem Mundstück 11 nach oben verfahren bis er den Halteschaft 6 des Werkzeugs 2 sicher einspannen kann. Sodann wird das Mundstück 11 des Greifers 4 geschlossen, wodurch das Werkzeug 2 mit seinem Halteschaft 6 in der Greiferhülse 9 eingespannt ist. Anschließend wird die Einspannzange 15 der Arbeitseinheit 7 gelöst und das Werkzeug 2 durch Verfahren des Greifers 4 nach unten aus der Arbeitseinheit 7 herausgezogen. Der Greifer 4 wird dann bis unter die entsprechende Stelle der Speicherplatte 1 verfahren, wo er dann hochgefahren wird, bis sich der Halteschaft 6 des Werkzeuges 2 in ein Werkzeugaufnahmeloch 3 der Speichereinrichtung 1 hineinschiebt und an das Anschlagmittel 5 anschlägt. Dann wird das Mundstück 11 geöffnet und der Greifer 4 zunächst nach unten und anschließend in Warte position verfahren, wo er für den nächsten Einsatz zur Verfügung steht, oder unmittelbar zum Transportieren eines neuen Werkzeuges 2 eingesetzt.

Bezugszeichenliste:

1 Speicherplatte
2 Werkzeug
3 Werkzeugaufnahmeloch
4 Greifer
5 Anschlagmittel
6 Halteschaft
7 Arbeitseinheit
8 Werkzeugaufnahmeöffnung
9 Greiferhülse
10 Anschlagfläche
11 Mundstück
12 Grundplatte
13 Beschichtung
14 Arbeitsspindel
15 Einspannzange
16 Anschlagfläche

**Ansprüche**

1. Werkzeugwechseleinrichtung an einer Werkzeugmaschine, bei welcher jedes einer Vielzahl von Werkzeugen (2) aus einer entsprechende Werkzeugaufnahmelöcher (3) aufweisenden Speicher platte (1) mittels einer einen z.B. als Hubgreifer ausgebildeten Greifer (4) aufweisenden Werkzeugtransporteinrichtung herausgezogen und einer Arbeitseinheit (7) übergeben sowie nach Gebrauch aus der Arbeitseinheit (7) herausgenommen, wieder zurück zur Speicherplatte (1) gebracht und in eines der Werkzeugaufnahmelöcher (3) gesteckt wird, wobei den Werkzeugaufnahmelöchern (3) Mittel zum Halten der Werkzeuge (2) zugeordnet sind, dadurch gekennzeichnet, daß der Speicherplatte (1) auf der dem Greifer (4) abgewandten Seite in vorgegebenem Abstand hinter den Werkzeugaufnahmelöchern (3) Anschlagmittel (5) für den jeweiligen Halteschaft (6) der Werkzeuge (2) zugeordnet sind, und daß der Greifer (4) jedenfalls beim Entnehmen des Werkzeugs (2) aus der Speicherplatte (1) und beim Übergeben des Werkzeugs (2) an die Arbeitseinheit (7) auf Anschlag mit der Speicherplatte (1) bzw. auf Anschlag mit der Arbeitseinheit (7) verfahrbar ist.

2. Werkzeugwechseleinrichtung nach Anspruch 1, dadurch gekennzeichnet, daß die Anschlagmittel (5) als zur Speicherplatte (1) parallel verlaufende Anschlagplatte ausgebildet sind.

3. Werkzeugwechseleinrichtung nach Anspruch 1 oder 2, dadurch gekennzeichnet, daß in einer Werkzeugaufnahmeöffnung (8) des Greifers (4) eine z.B. als Greiferhülse (9) aus elastisch nachgiebigem, vorzugsweise abriebfestem Material, z.B. Kunststoff oder Gummi, Belag zum reibschlüssigen Ineingrifftreten mit dem jeweiligen Halteschaft (6) des zu transportierenden Werkzeugs (2) angeordnet ist.

4. Werkzeugwechseleinrichtung nach einem der Ansprüche 1 bis 3, dadurch gekennzeichnet, daß der Greifer (4) ein Mundstück (11) mit der Werkzeugaufnahmeöffnung (8) aufweist und Teile des Mundstücks (11) zangenartig unter Ausübung einer radialen Kraft auf den Halteschaft (6) eines Werkzeuges (2) bzw. auf die Greiferhülse (9) zueinander bewegbar sind.

5. Werkzeugwechseleinrichtung nach einem der Ansprüche 1 bis 4, dadurch gekennzeichnet, daß der Greifer (4) heb- und senkbar angeordnet ist und eine Anschlagfläche (10) für das Zusammenwirken mit der Speicherplatte (1) und der Arbeitseinheit (7) aufweist.

6. Werkzeugwechseleinrichtung nach einem der Ansprüche 1 bis 5, dadurch gekennzeichnet, daß die Anschlagfläche (10) von der Stirnfläche des Mundstücks (11) des Greifers (4) gebildet ist, in welchen sich die Werkzeugaufnahmeöffnung (8) befindet.

7. Werkzeugwechseleinrichtung nach einem der Ansprüche 1 bis 6, dadurch gekennzeichnet, daß zum Tiefenbohren die Arbeitseinheit (7) mit einer an sich bekannten Meßeinrichtung zur Erfassung der Länge des aus der Arbeitspindel (14) herausragenden Abschnitts des Werkzeuges (2) ausgerüstet ist.

FIG. 1b

FIG.1a